# EUROPEAN PATENT SPECIFICATION

(11) **EP 2 936 413 B1**
(45) Date of publication and mention of the grant of the patent: **30.01.2019**
(21) Application number: 13822031.4
(22) Date of filing: 20.12.2013
(51) Int. Cl.: G06Q 30/02, G06F 21/64, G06F 21/62

(54) **DIGITAL SIGNATURES FOR ONLINE ADVERTISEMENT SECURITY**
DIGITALE UNTERSCHRIFTEN FÜR ONLINEWERBUNGSSICHERHEIT
SIGNATURES NUMÉRIQUES POUR LA SÉCURITÉ DE PUBLICITÉS EN LIGNE

(30) Priority: 20.12.2012 US 201213721180
(43) Date of publication of application: 28.10.2015
(73) Proprietor: Microsoft Technology Licensing, LLC, Redmond, WA 98052 (US)
(72) Inventor: BITRAN, Hadas, Redmond, WA 98052-6399 (US); SOMECH, Haim, Redmond, WA 98052-6399 (US); OREN, Ishai, Redmond, WA 98052-6399 (US); BARASH, Uri, Redmond, WA 98052-6399 (US); MIZRACHI, Ran, Redmond, WA 98052-6399 (US)
(74) Representative: Goddar, Heinz J.
(86) International application number: PCT/US2013/076850
(87) International publication number: WO 2014/100556

(56) References cited:
- US-A1- 2010 125 523
- US-A1- 2010 319 049

## Description

### BACKGROUND

Advertisements are often delivered with a web service as a way of monetizing the web service. The provider of a web service may include an iframe within the content that is delivered to a user. The iframe retrieves an ad from an ad server and renders the ad while the user is viewing the service's content. For example, the user may visit the service's web page, or may invoke the service's smart phone application, and an ad may be rendered on the user's device along with the service's content.

Typically, the ad is chosen dynamically rather than being a fixture of the service's content. Thus, it is often the case that neither the provider of the web service, nor the end user of that service, knows what ad content is going to be rendered when the user downloads the service's web page or invokes the service's application. Downloading unknown content may present security issues.

Certain web pages provide an iframe element in which an ad is rendered. Since the iframe provides some measure of isolation, ads that can be rendered only within an iframe mitigate some of the security concerns associated with rendering arbitrary, unknown content. However, there are certain contexts where an iframe is not used to isolate the ad content.

US 2010/319049 A1 teaches client-side enforcement of an advertisement content policy. A trusted agent receives ads to be displayed to a user by an advertisement management module and verifies their digital signatures as well as their compliance with an advertising policy.

US 2010/125523 A1 teaches issuing certificates for advertisements to be embedded in documents, such as websites, that are to be displayed to a user.

### SUMMARY

Ads may be verified for security prior to being rendered. A content provider may put an ad control into content, where the ad control retrieves and renders an ad while the user is using the content. The ad is digitally signed. When the ad control receives the ad, it verifies the digital signature before rendering the ad.

If the digital signature on the ad verifies, then the ad control renders the ad. If the digital signature does not verify, then the ad control determines that the ad is not safe to render and requests another ad.

Advertisers may submit their ads to a verification service before those ads can be served and rendered. The verification service may be the same entity that delivers the ads to the ad control, or may be a third-party service. The verification service may perform various tests on the ad to determine its safety. For example, the verification service may check the specific components of the ads (e.g., videos, animations, scripts, etc.) for malware. Additionally, if the ad contains a Uniform Resource Locator (URL) that points to a landing page, the advertiser may verify the security of the landing page. (Since the landing page may change even if its URL does not change, the verification service may continue to check the landing page even after the ad has been verified.) If the ad is determined to be safe, the verification service creates a certificate for the ad and signs the certificate. The ad is then entered into an ad repository, where it is available to be served.

The ad control may maintain a certificate revocation list (CRL). If an ad that has been certified becomes unsafe, its certificate is revoked. For example, if the landing page changes and becomes unsafe, then any ad that points to that landing page may have its certificate revoked. If an ad control receives an ad whose certificate is on the CRL, the ad control does not render the ad.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

FIG. 1 is a block diagram of an example device on which an ad may be rendered.
FIG. 2 is a block diagram of an example system in which ads may be requested and verified.
FIG. 3 is a flow diagram of an example process by which a program renders an ad.
FIG. 4 is a flow diagram of an example process of certifying an ad.
FIG. 5 is a block diagram of example components that may be used in connection with implementations of the subject matter described herein.

### DETAILED DESCRIPTION

Online services often render advertisements ("ads"), along with the content that the services provide, as a way of generating revenue. Services such as weather reports, television listings, or online board games may generate revenue by allowing ads to be rendered along with the content that the user wants to see. For example, the user of an online board game may see both the game and a third-party ad for a retail site. An ad typically generates revenue for the service operator when a user clicks on the ad (although other business models - such as cost per thousand (CPM) advertising - may be used).

When online services are delivered through a web site, typically the web page served by the web site contains a location in which advertising content may be rendered. For example, the page generated by the service may contain the service's content on the left side of the page, with a rectangle on the right side reserved for advertising content. The rectangle reserved for advertising is often implemented as a Hypertext Markup Language (HTML) iframe. The iframe calls an ad server, and the browser renders the ad inside the iframe.

But many web services are being provided in a way that is not amenable to the above model. For example, many users access online services on their smart phones or tablets through the service's application ("app"). Apps can have ad controls that cause ads to be displayed while the user is using the app. These apps typically are not implemented with HTML iframes, and often give the app developer relatively free reign to affect the user experience of his or her app on the device by deciding where to place the ad control. An ad contains content that is likely to be unknown both to the provider of the online service and the user of that service. Allowing such content to be rendered presents a risk to the quality of the user experience and, in many cases, a security risk.

The subject matter herein provides a way to verify ad content, so that ads are rendered only after they have been verified to meet certain conditions. In order to provide ads with content, the content provider (e.g., the operator of an online service) includes an ad control with the content. The ad control typically takes the form of code to be included within an app or web page. When the content is loaded, the ad control causes an ad to be retrieved and rendered. Typically, the ad control is provided by the service that will be used to place ads. E.g., Google may provide one ad control that retrieves ads from Google's advertising servers, and Microsoft may provide a different ad control that retrieves ads from Microsoft's advertising servers. The content provider decides which entity it wants to place ads with its content, and includes that entity's ad control in its content. Ad control may also be "universal" and may call an exchange for the highest value offer for the impression.

Ads that are to be served are certified after meeting certain security and content tests. An advertiser may submit an ad for verification. The ad may then be tested in various ways. For example, the various components in the ad (videos, images, scripts, etc.) may be verified to ensure that they are free of malware. There may be certain content limits on the ad - e.g., a service that places ads might place constraints on the type of content that may be in the ads (e.g., banning Flash scripts), even if the content in question does not contain malware. The landing page for the ad may be verified to ensure that the landing page is free of malware. Once the ad has been verified, a certificate for the ad is issued, and the certified is signed. The certified and signature may be created by the entity that operates the ad service, or may be created by a third-party entity that has been recognized to work with the ad service's ad control.

At some point during the viewing of content on the user's device, ad control contacts the appropriate ad server to request an ad. When the ad is received, the ad control verifies the certificate for the ad. The ad control may first verify that the certificate is not on a Certificate Revocation List (CRL). If the certificate is not on a CRL, then the ad control verifies the signature in the certificate. If the certificate verifies and has not been revoked, then the ad control determines that the ad is safe to render, and renders the ad. Otherwise, if the certificate does not verify for any reason (e.g., the certificate is on the CRL, the certificate is expired, or the signature cannot be validated against the ad's content), then the ad control determines that the ad is not safe to render and requests a new ad.

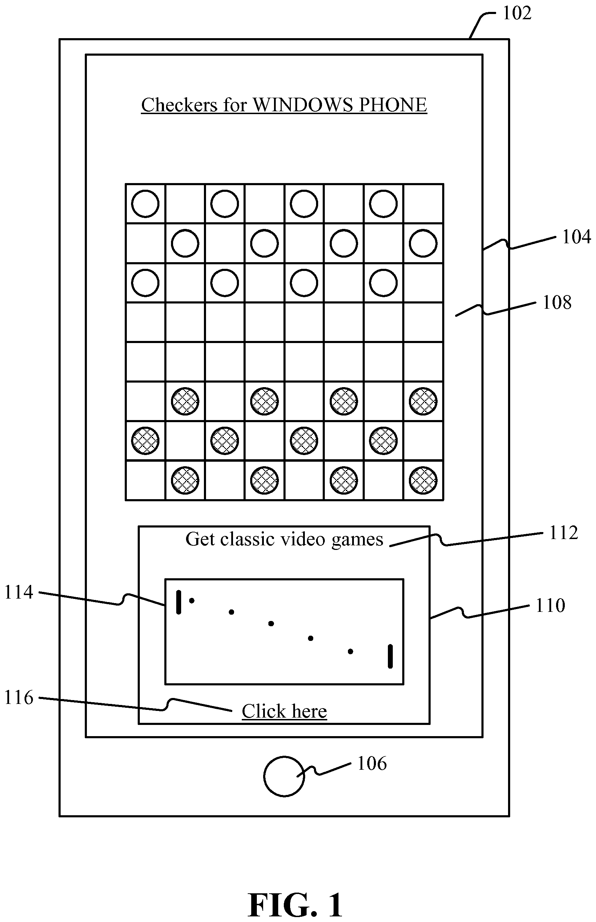

Turning now to the drawings, FIG. 1 shows an example device on which an ad may be rendered together with an online service's content. Device 102 may be a smart phone, tablet computer, personal computer, set top box, or any other device that has some computing capability. In the example shown, device 102 is depicted as a smart phone, although device 102 could be any appropriate type of device. Device 102 may have various input and output devices, such as display 104 (which may be a touch screen) and home button 106, which allow a user to interact with device 102 (e.g., by receiving input in the form of gestures). Input and output may also be accomplished through components that receive voice commands or that generate audio.

In the example shown, an app 108 called "Checkers for WINDOWS PHONE" is running on device 102. App 108 is an example of an app that facilitates the use of an online service. An opponent in the checkers game shown may be played by a server computer operated by an online game service. Or, the online game service may facilitate game play between human opponents who are distant from each other. In either case, app 108 is facilitating the use of an online service, and the operator of that service might want to monetize the service through the use of ads. While a game service is shown in the example of FIG. 1, it is noted that the service in question could provide weather, maps, search, mathematical equation solving, airline flight information, or could be any other type of service.

In order to monetize the underlying service through the use of ads, the provider of app 108 may include an ad control within app 108. Ad control causes app 108 to display ads on device 102. Ad 110 is an example of such an ad. In the example shown, ad 110 has a text message 112 ("Get classic video games"), a video 114 (showing the classic game "pong" being played), and a link 116, which points to a "landing page" for the ad. In the example of FIG. 1, ad 110 is shown as being a visual banner ad that is located in a rectangular boundary. However, the ad control may have the ability to affect, arbitrarily, the user's experience on device 102. That is, the ad control might have the technical ability to overlay an ad over the entire display 104 (instead of keeping the ad within a discrete rectangle), to play audio through the speakers, to invoke mechanical functions on the device such as vibration, or to invoke another application on the device. Thus, the ad control can interfere with the user's experience, and might even be able to compromise the security of the device, depending on what type of advertising content ad control serves. An ad control that causes offensive or dangerous ads to be rendered may be less likely to be adopted by ad developers, and may also compromise people's opinion of the platform on which app 108 operates. (E.g., people may have a negative opinion of a particular smart phone operating system if, while using such a system, they often receive offensive or destructive ads.) Thus, the operator of ad control, and the distributor of device 102's platform, may have an incentive to verify ads before they are rendered.

It will be understood that app 108 is an example of content that may contain an ad control that delivers an ad. A web page that is rendered by a browser is also an example of such content. Thus, ad 110 might be rendered as part of a web page. Moreover, all of the discussion herein concerning ad controls that operate with apps applies equally to ad controls that operate with web pages.

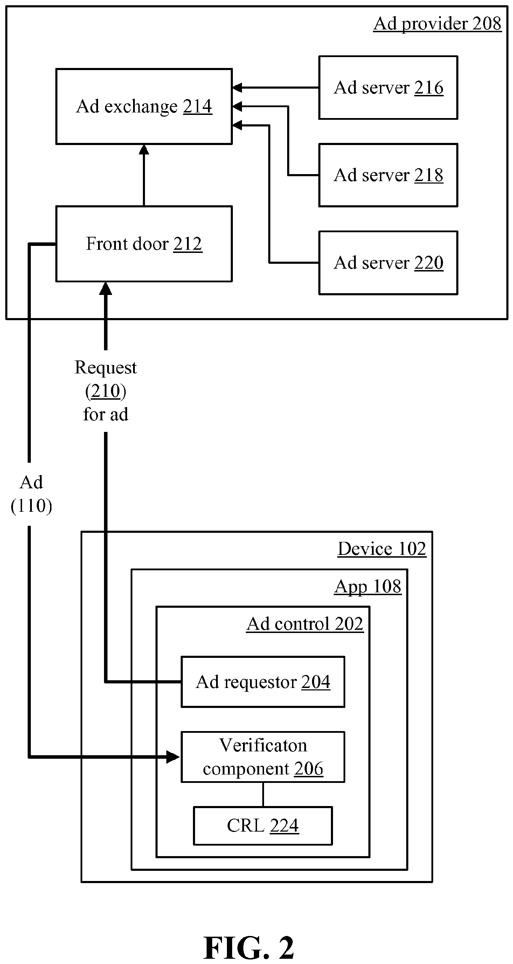

FIG. 2 shows an example system in which ads may be requested and verified. App 108 runs on device 102. (Both app 108 and device 102 are described above in connection with FIG. 1.) App 108 includes ad control 202, which obtains and renders ads on device 102 while a user is using app 108. Ad control 202 may comprise an ad requestor 204 and a verification component 206. Ad requestor 204 is a component that requests an ad from an ad provider 208. Verification component 206 verifies the signatures of ads. Ad control 202, ad requestor 204, and verification component 206 may be implemented as software that executes on device 102.

When an ad is to be rendered, ad control 202 causes ad requestor 204 to submit a request 210 for an ad to ad provider 208. Ad provider 208 may use any type of underlying infrastructure to provide an ad. One example infrastructure is shown in FIG. 2. Ad provider 208 may have a front door 212 that receives ad request 210, and that provides the requested ads. Front door 212 may contact an ad exchange 214, which obtains ads from several ads servers 216, 218, and 220. For example, ad servers 216-220 may be operated by various different organizations that accept ads from publishers for placement, and ad exchange may obtain ads from these servers in order to serve ads in response to requests. While the structure of ad provider 208 shown in FIG. 2 is one example of how an ad provider may be organized, the subject matter herein may use any ad provider, regardless of what underlying structure it uses to provide ads.

In response to request 210, ad provider 208 provides an ad 110 to ad control 202. The ad 110 is received by ad control 202's verification component 206. Verification component 206 may verify ad 110 by verifying the certificate and signature associated with ad 110. Verification component 206 may also check whether the certificate associated with ad 110 is on the certificate revocation list (CRL) 224. Verification component may periodically receive a new CRL 224 from ad provider 208, or from another entity, so that it can determine whether any previously certified ads have been "decertified." For example, as noted above, an ad that points to a landing page may have its certified revoked if the landing page becomes unsafe sometime after the certificate was issued. In addition to determining whether the certificate associated with an ad is on CRL 224, verification component 206 may also determine whether the certificate for an ad has expired. Additionally, the certification may contain the identities of the advertisers and the certification authority, and verification component 206 may determine whether an advertiser has been blacklisted or if the certification authority's ability to issue certificates has been revoked.

Once verification component 206 has determined that the certificate associated with ad 110 is not on CRL 224 and is not expired, that the signature in the certificate validates, and that the advertiser has not been blacklisted, and that the certification authority's ability to issue certificates has not been revoked, verification component indicates to ad control 202 that the ad is safe to render. Ad control 202 then renders the ad. If the ad is not deemed to be safe to render, then ad control 202 may request another ad from ad provider 208, which it may then verify again in the manner described above. It is noted that FIG. 2 shows front door 212 and ad exchange 214 being part of ad provider 208, but front door 212 and/or ad exchange 214 could be separate from ad provider 208.

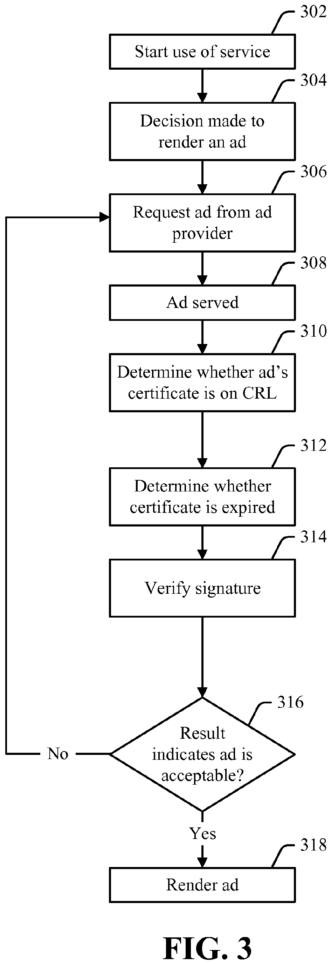

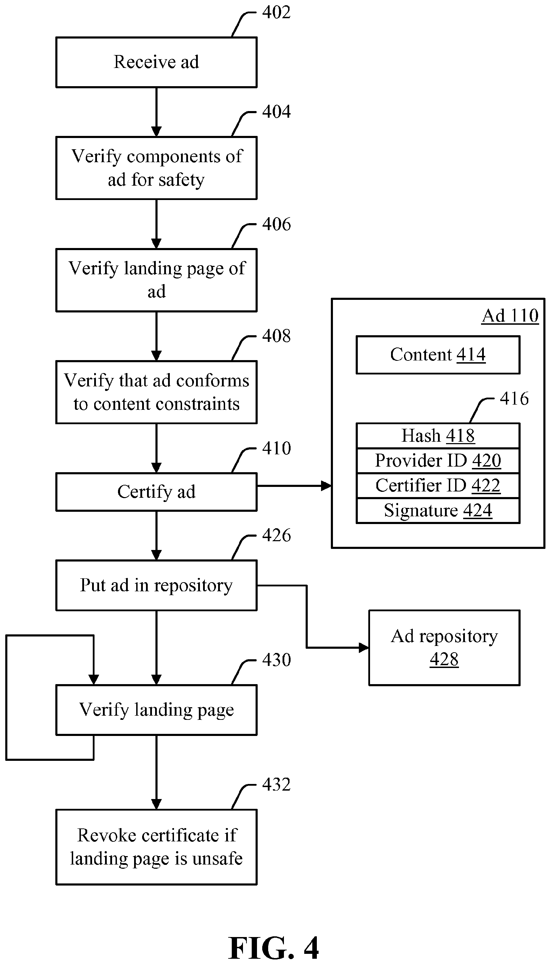

FIG. 3 shows an example process by which a program renders an ad. Before turning to a description of FIG. 3, it is noted that the flow diagrams contained herein (both in FIG. 3 and in FIG. 4) are described, by way of example, with reference to components shown in FIGS. 1 and 2, although the processes of FIGS. 3 and 4 may be carried out in any system and are not limited to the scenarios shown in FIGS. 1 and 2. Additionally, each of the flow diagrams in FIGS. 3 and 4 shows an example in which stages of a process are carried out in a particular order, as indicated by the lines connecting the blocks, but the various stages shown in these diagrams can be performed in any order, or in any combination or sub-combination.

At 302, the use of a service is started. The service may be an online service, such as a game, weather reporting service, flight status service, or any other type of service. Starting the use of a service may be performed by invoking the app that is used to access the service, or may be performed by visiting the service's web page through a browser.

At some point during the use of the service, a decision may be made to render an ad (at 304). This decision may be made by the ad control that is incorporated into the app or web page through which the user is accessing the service. A request for an ad is made to an ad provider (at 306), and the ad provider responds by serving an ad to the requestor (at 308). The ad may be chosen based on the type of content with which the user is interacting (e.g., serving an ad for a game while a user is playing a different game), based on the user's history, or based on any other appropriate considerations. (If the ad is chosen based on information specific to the user, appropriate permission may be obtained in order to protect the user's interest in privacy.)

The process then proceeds to verify the certificate of the ad. At 310, a determination may be made as to whether the ad's certificate is on the current CRL. At 312, a determination may be made as to whether the ad's certificate is expired. At 314, the signature on the certificate may be verified. The result of these checks determines whether the ad is acceptable to render. These checks may also include a determination as to whether the certification authority's ability to issue certificates has been revoked, or if the advertiser has been blacklisted.

If the result indicates the ad is acceptable (as determined at 316), then the ad control renders the ad at 318. If the result indicates that the ad is not acceptable, then the process returns to 306, so that the ad control may request another ad.

FIG. 4 shows an example process of certifying an ad. At 402, an ad is received. The ad may be received by a service that runs an advertisement engine, or by a third-party advertisement certifier. At 404, the various components of the ad (e.g., video, audio, scripts, etc.) are verified for safety. Verification for safety may include scanning these components for malware to determine that they contain no malware. At 406, the landing page of the ad may be verified for safety - e.g., by verifying that the landing page pointed to by the ad does not contain malware. It is noted that malware is not the only thing that might be deemed objectionable. For example, an ad or its landing page might technically be malware free, but might contain code that creates some objectionable user experience that the entity that operates the advertising engine does not want to promote (e.g., an ad or landing page might cause a visual takeover of the user's screen, a loud or offensive noise, etc.). Thus, at 408, the ad (and, possibly the landing page) may be verified to determine that their content complies with any constraints imposed by the entity that operates the advertising engine. It is noted that the process of determining which ads are unsafe could be crowd-sourced to some extent; e.g., there could be a mechanism to receive complaints, and specific ads could have their certificates revoked temporarily pending an investigation of the ad.

If the ad passes all of the verifications performed at 404-408, then the ad is certified at 410. The result of the certification is an ad 110, which includes the ad's content 414 and a certificate 416. The certificate, in one example, may include a hash 418 of the ad's content, the identifier (ID) 420 of the ad provider, the ID 422 of the certifier, and a digital signature 424.

Once the ad has been certified, the ad (at 426) may be placed in an ad repository 428. After the ad has been placed in an ad repository, the landing page may be verified recurrently (at 430). The reason to verify the landing page recurrently is that the landing page may change even after the ad is certified. The ad itself (including the Uniform Resource Locator ("URL") of the landing page) is fixed at the time of certification, since hash 418 in certificate 416 ensures that verification of the certificate would fail if the URL (or any other content included in the ad itself) were to change after the certificate issues. (In this way, any change to the URL itself that occurs after the ad is certified would effectively necessitate re-certification of the ad so that a new digital signature could be calculated.) However, the landing page pointed to by the URL can change even if the URL itself does not change. Therefore, to ensure that a user will not be exposed to a landing page that becomes infected with malware after the certificate for the ad has been issued, the landing page may be continually verified, and the ad's certificate may be revoked (at 432) if, at some point, the landing page fails to pass an evaluation. Revoking the ad's certificate may be accomplished by placing the ad's certificate on a CRL, and either making that CRL available in the cloud to instances of the ad control, or by promulgating the CRL to the instances of the ad control.

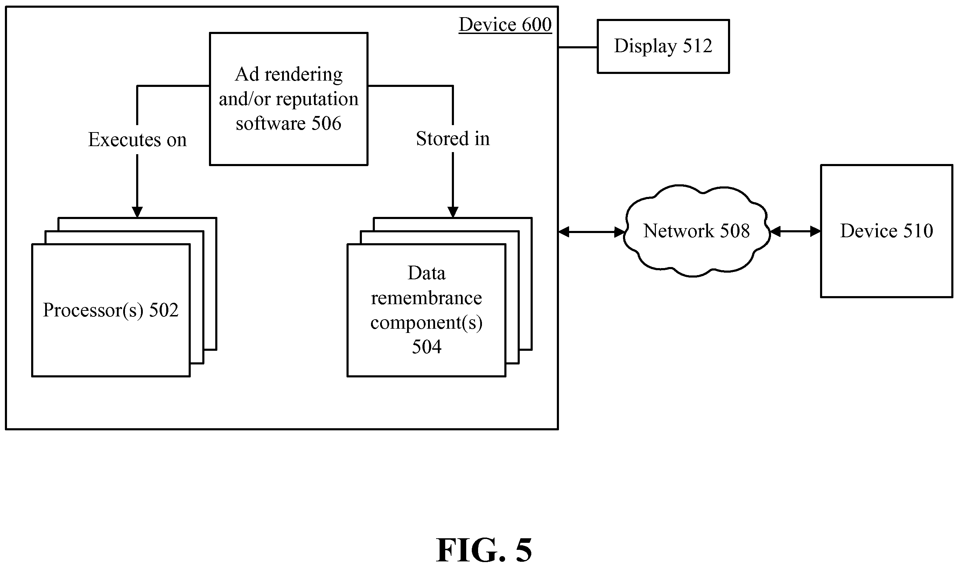

FIG. 5 shows an example environment in which aspects of the subject matter described herein may be deployed.

Device 500 includes one or more processors 502 and one or more data remembrance components 504. Device 500 may be any type of hardware with some computing power. A smart phone is one example of device 500, although device 500 could be a desktop computer, laptop computer, tablet computer, server computer, set top box, or any other appropriate type of device. Processor(s) 502 are typically microprocessors, such as those found in a personal desktop or laptop computer, a server, a handheld computer, or another kind of computing device. Data remembrance component(s) 504 are components that are capable of storing data for either the short or long term. Examples of data remembrance component(s) 504 include hard disks, removable disks (including optical and magnetic disks), volatile and non-volatile random-access memory (RAM), read-only memory (ROM), flash memory, magnetic tape, etc. Data remembrance component(s) are examples of computer-readable (or device-readable) storage media. Device 500 may comprise, or be associated with, display 512, which may be a cathode ray tube (CRT) monitor, a liquid crystal display (LCD) monitor, or any other type of monitor. Display 512 may be an output-only type of display; however, in another non-limiting example, display 512 may be (or comprise) a touch screen that is capable of both displaying and receiving information.

Software may be stored in the data remembrance component(s) 504, and may execute on the one or more processor(s) 502. An example of such software is search and ad rendering and/or reputation software 506, which may implement some or all of the functionality described above in connection with FIGS. 1-4, although any type of software could be used. Software 506 may be implemented, for example, through one or more components, which may be components in a distributed system, separate files, separate functions, separate objects, separate lines of code, etc. A device (e.g., smart phone, personal computer, server computer, handheld computer, tablet computer, set top box, etc.) in which a program is stored on hard disk, loaded into RAM, and executed on the device's processor(s) typifies the scenario depicted in FIG. 5, although the subject matter described herein is not limited to this example.

The subject matter described herein can be implemented as software that is stored in one or more of the data remembrance component(s) 504 and that executes on one or more of the processor(s) 502. As another example, the subject matter can be implemented as instructions that are stored on one or more device-readable media. Such instructions, when executed by a phone, computer, or other machine, may cause the phone, computer, or other machine to perform one or more acts of a method. The instructions to perform the acts could be stored on one medium, or could be spread out across plural media, so that the instructions might appear collectively on the one or more computer-readable (or device-readable) media, regardless of whether all of the instructions happen to be on the same medium. The terms "computer-readable media" and "device-readable media" do not include signals per se. Additionally, it is noted that "hardware media" or "tangible media" include devices such as RAMs, ROMs, flash memories, and disks that exist in physical, tangible form; such "hardware media" or "tangible media" are not signals per se. Moreover, "storage media" are media that store information. The term "storage" is used to denote the durable retention of data. For the purpose of the subject matter herein, information that exists only in the form of propagating signals is not considered to be "durably" retained. Therefore, "storage media" include disks, RAMs, ROMs, etc., but does not include information that exists only in the form of a propagating signal because such information is not "stored."

Additionally, any acts described herein (whether or not shown in a diagram) may be performed by a processor (e.g., one or more of processors 502) as part of a method. Thus, if the acts A, B, and C are described herein, then a method may be performed that comprises the acts of A, B, and C. Moreover, if the acts of A, B, and C are described herein, then a method may be performed that comprises using a processor to perform the acts of A, B, and C.

In one example environment, device 500 may be communicatively connected to one or more other devices through network 508. Device 510, which may be similar in structure to any of the examples of device 500, is a kind of device that can be connected to device 500, although other types of devices may also be so connected.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, comprising:
receiving an ad (402) by a service on an advertisement engine;
certifying (410) said ad by verifying at least that a landing page pointed to by the ad complies with one or more predefined constraints, (406, 408) said certifying including generating a certificate (416) comprising a hash (418) of content of the ad;
placing (426) said ad in a repository (428) in response to certifying said ad;
in response to receiving a request for an ad (210) at an ad provider, (208) obtaining an ad from a server, and providing said ad to an ad control (202);
at said ad control, verifying that a certificate associated with the ad is not included in a list of revoked certificates (224);
rendering said ad in response to determining that the certificate is not on said list of revoked certificates;
repeating certifying (430) for said ad in response to determining that a hash associated with said ad does not comply with the content of the ad; and
revoking (432) a certificate associated with said ad in response to determining that a landing page associated with said ad has become unsafe, said revoking including placing said certificate on said list of revoked certificates.

2. A device, (102) comprising:
a memory;
a processor;
a display;
an advertisement engine configured to receive an ad, (402) and to certify (410) said ad by verifying (406) at least that a landing page pointed to by the ad complies with one or more predefined constraints, said certifying including generating a certificate comprising a hash of content of the ad; (416, 418) and an application that is stored in said memory, that executes on said processor, and that comprises an ad control, (202) said ad control configured to receive an ad obtained from a server in response to receiving a request for an ad by said application, wherein said ad control is further configured to verify that a certificate associated with the ad is not included in a list of revoked certificates, (224) and to request a different ad in response to determining that the certificate is on said list of revoked certificates;
wherein certifying for said ad is repeated (430) in response to determining that a hash associated with said ad does not comply with the content of the ad; and
wherein a certificate associated with said ad is revoked in response to determining that a landing page associated with said ad has become unsafe, said revoking including placing said certificate on said list of revoked certificates (224).

3. A device-readable medium that stores executable instructions that, when executed by a device, cause the device to perform the method according to claim 1.

## Patentansprüche

1. Verfahren, umfassend:
Empfangen (402) einer Anzeige durch einen Dienst an einer Werbe-Engine;
Zertifizieren (410) der Anzeige durch Verifizieren (406, 408) zumindest, dass eine Zielseite, auf die durch die Anzeige gezeigt wird, einer oder mehreren vordefinierten Beschränkungen entspricht, wobei das Zertifizieren Erzeugen (416) eines Zertifikats aufweist, das einen Hash (418) des Inhalts der Anzeige umfasst;
Platzieren (426) der Anzeige in einem Repository (428) als Reaktion auf das Zertifizieren der Anzeige;
als Reaktion auf ein Empfangen einer Anfrage nach einer Anzeige (210) bei einem Provider (208), Erhalten einer Anzeige von einem Server, und Bereitstellen der Anzeige an eine Anzeigensteuerung (202);
an der Anzeigensteuerung, Verifizieren, dass ein der Anzeige zugeordnetes Zertifikat nicht in einer Liste von widerrufenen Zertifikaten (224) enthalten ist,
Rendern der Anzeige als Reaktion auf ein Bestimmen, dass das Zertifikat nicht auf der Liste der widerrufenen Zertifikate steht;
Wiederholen der Zertifizierung (430) für die Anzeige als Reaktion auf ein Bestimmen, dass ein der Anzeige zugeordneter Hash nicht dem Inhalt der Anzeige entspricht; und
Widerrufen (432) eines der Anzeige zugeordneten Zertifikats als Reaktion auf ein Bestimmen, dass eine der Anzeige zugeordnete Startseite unsicher geworden ist, wobei das Widerrufen Platzieren des Zertifikats auf der Liste der widerrufenen Zertifikate aufweist.

2. Vorrichtung (102), umfassend:
einen Speicher;
einen Prozessor;
einen Bildschirm;
eine Werbe-Engine, die konfiguriert ist, eine Anzeige zu empfangen (402), und die Anzeige zu zertifizieren (410) durch Verifizieren (406) zumindest, dass eine Startseite, auf die die Anzeige zeigt, einer oder mehreren vordefinierten Beschränkungen entspricht, wobei das Zertifizieren Erzeugen eines Zertifikats aufweist, das einen Hash des Inhalts der Anzeige umfasst (416, 418); und
eine in dem Speicher gespeicherte Anwendung, die auf dem Prozessor ausgeführt wird und eine Anzeigensteuerung (202) umfasst, wobei die Anzeigensteuerung konfiguriert ist, als Reaktion auf ein Empfangen einer Anfrage nach einer Anzeige durch die Anwendung eine von einem Server erhaltene Anzeige zu empfangen; wobei die Anzeigensteuerung ferner konfiguriert ist zu verifizieren, dass ein der Anzeige zugeordnetes Zertifikat nicht in einer Liste von widerrufenen Zertifikaten (224) enthalten ist, und eine andere Anzeige anzufordern, als Reaktion auf ein Bestimmen, dass das Zertifikat auf der Liste der widerrufenen Zertifikate steht;
wobei das Zertifizieren für die Anzeige wiederholt wird (430) als Reaktion auf ein Bestimmen, dass ein der Anzeige zugeordneter Hash nicht dem Inhalt der Anzeige entspricht; und
wobei ein der Anzeige zugeordnetes Zertifikat als Reaktion auf ein Bestimmen, dass eine der Anzeige zugeordnete Startseite unsicher geworden ist, widerrufen wird, wobei das Widerrufen Platzieren des Zertifikats auf der Liste der widerrufenen Zertifikate (224) aufweist.

3. Medium, das mit einer Vorrichtung gelesen werden kann, das ausführbare Anweisungen speichert, die, wenn sie von einer Vorrichtung ausgeführt werden, die Vorrichtung veranlassen, das Verfahren gemäß Anspruch 1 auszuführen.

## Revendications

1. Procédé, comprenant les étapes consistant à :
recevoir une annonce (402) par un service sur un moteur publicitaire ;
certifier (410) ladite annonce en vérifiant au moins qu'une page d'atterrissage sur laquelle l'annonce pointe satisfait à une ou plusieurs contraintes prédéfinies (406, 408), ladite certification consistant à générer un certificat (416) contenant une valeur de hachage (418) du contenu de l'annonce ;
placer (426) ladite annonce dans un référentiel (428) en réponse à la certification de ladite annonce ;
en réponse à la réception d'une demande concernant une annonce (210) au niveau d'un fournisseur d'annonces (208), obtenir une annonce en provenance d'un serveur et fournir ladite annonce à un contrôle d'annonce (202) ;
au niveau dudit contrôle d'annonce, vérifier qu'un certificat associé à l'annonce ne figure pas sur une liste de certificats révoqués (224) ;
reproduire ladite annonce en réponse à la détermination du fait que le certificat ne figure pas sur ladite liste de certificats révoqués ;
répéter la certification (430) pour ladite annonce en réponse à la détermination du fait qu'une valeur de hachage associée à ladite annonce ne correspond pas au contenu de l'annonce ; et
révoquer (432) un certificat associé à ladite annonce en réponse à la détermination du fait qu'une page d'atterrissage associée à ladite annonce est devenue non sûre, ladite révocation consistant à placer ledit certificat sur ladite liste des certificats révoqués.

2. Dispositif, comprenant :
une mémoire ;
un processeur ;
un écran ;
un moteur publicitaire configuré pour recevoir une annonce (402) et pour certifier (410) ladite annonce en vérifiant (406) au moins qu'une page d'atterrissage sur laquelle l'annonce pointe satisfait à une ou plusieurs contraintes prédéfinies, ladite certification consistant à générer un certificat contenant une valeur de hachage du contenu de l'annonce ; (416, 418) et une application qui est stockée dans ladite mémoire, qui s'exécute sur ledit processeur, et qui comprend un contrôle d'annonce (202),
ledit contrôle d'annonce étant configuré pour recevoir une annonce obtenue d'un serveur en réponse à la réception d'une demande concernant une annonce par ladite application, ledit contrôle d'annonce étant également configuré pour vérifier qu'un certificat associé à l'annonce ne figure pas sur une liste de certificats révoqués (224) et pour demander une autre annonce en réponse à la détermination du fait que le certificat figure sur ladite liste de certificats révoqués ;
la certification destinée à ladite annonce étant répétée (430) en réponse à la détermination du fait qu'une valeur de hachage associée à ladite annonce ne correspond pas au contenu de l'annonce ; et
un certificat associé à ladite annonce étant révoqué en réponse à la détermination du fait qu'une page d'atterrissage associée à ladite annonce est devenue non sûre, ladite révocation consistant à placer ledit certificat sur ladite liste des certificats révoqués (224).

3. Support lisible par un dispositif, servant à stocker des instructions exécutables qui, lorsqu'elles sont exécutées par un dispositif, font en sorte que le dispositif exécute le procédé selon la revendication 1.
